# EUROPEAN PATENT APPLICATION

(11) **EP 3 588 970 A1**
(43) Date of publication of application: **01.01.2020**
(21) Application number: 18179291.2
(22) Date of filing: 22.06.2018
(51) Int. Cl.: H04N 21/854, H04N 21/25, H04N 21/6587, H04N 13/279, H04N 13/117

(54) **APPARATUS AND METHOD FOR GENERATING AN IMAGE DATA STREAM**

(71) Applicant: Koninklijke Philips N.V., 5656 AE Eindhoven (NL)
(72) Inventor: Bruls, Wilhelmus Hendrikus Alfonsus, 5656 AE Eindhoven (NL); Kroon, Bart, 5656 AE Eindhoven (NL)
(74) Representative: de Haan, Poul Erik

(57) **Abstract**

An apparatus for generating an image data stream representing views of a scene, e.g. for a Virtual Reality application. The apparatus comprises a receiver (203) receiving a gaze indication indicative of both a head pose and a relative eye pose for a viewer. The head pose includes a head position and the relative eye pose is indicative of an eye pose relative to the head pose. A determiner (205) determines a, typically small/ narrow, visual attention region in the scene corresponding to the gaze indication. Specifically, a region around a gaze point may be identified. A generator (209) generates the image data stream to comprise image data for the scene having a higher quality level/ data rate for the visual attention region than outside of the visual attention region.

## Description

### FIELD OF THE INVENTION

The invention relates to an apparatus and method for generating an image data stream and in particular, but not exclusively, to generation of an image data stream for a virtual reality application accessing a scene.

### BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and "look around" in the scene being presented.

Such a feature can specifically allow a virtual reality experience to be provided to a user. This may allow the user to (relatively) freely move about in a virtual environment and dynamically change his position and where he is looking. Typically, such virtual reality applications are based on a three-dimensional model of the scene with the model being dynamically evaluated to provide the specific requested view. This approach is well known from e.g. game applications, such as in the category of first person shooters, for computers and consoles.

It is also desirable, in particular for virtual reality applications, that the image being presented is a three-dimensional image. Indeed, in order to optimize immersion of the viewer, it is typically preferred for the user to experience the presented scene as a three-dimensional scene. Indeed, a virtual reality experience should preferably allow a user to select his/her own position, camera viewpoint, and moment in time relative to a virtual world.

Typically, virtual reality applications are inherently limited in that they are based on a predetermined model of the scene, and typically on an artificial model of a virtual world. It would be desirable if a virtual reality experience could be provided based on real world capture. However, in many cases such an approach is very restricted or tends to require that a virtual model of the real world is built from the real world captures. The virtual reality experience is then generated by evaluating this model.

However, the current approaches tend to be suboptimal and tend to often have a high computational or communication resource requirement and/or provide a suboptimal user experience with e.g. reduced quality or restricted freedom.

As an example of an application, virtual reality glasses have entered the market. These glasses allow viewers to experience captured 360 degree (panoramic) video. These 360 degree videos are often pre-captured using camera rigs where individual images are stitched together into a single spherical mapping. Common stereo formats for 360 video are top/bottom and left/right. Similar to non-panoramic stereo video, the left-eye and right-eye pictures are compressed as part of a single H.264 video stream. After decoding a single frame, the viewer rotates his/her head to view the world around him/her. An example, is a recording wherein viewers can experience a 360 degree look-around effect, and can discretely switch between video streams recorded from different positions. When switching, another video stream is loaded, which interrupts the experience.

One drawback of the stereo panoramic video approach is that the viewer cannot change position in the virtual world. Encoding and transmission of a panoramic depth map besides the panoramic stereo video could allow for compensation of small translational motions of the viewer at the client side but such compensations would inherently be limited to small variations and movements and would not be able to provide an immersive and free virtual reality experience.

A related technology is free-viewpoint video in which multiple view-points with depth maps are encoded and transmitted in a single video stream. The bitrate of the video stream could be reduced by exploiting angular dependencies between the view-points in addition to the well-known temporal prediction schemes. However, the approach still requires a high bit rate and is restrictive in terms of the images that can be generated. It cannot practically provide an experience of completely free movement in a three-dimensional virtual reality world.

Unfortunately, none of the prior-art technologies can deliver an ideal experience but often tend to be restrictive in the freedom of the changes in the positions and viewing directions. In addition, the technologies tend to require a very high data rate and provide data streams that include more data than is necessary for the generation of the individual images/ views.

In many applications, and specifically for virtual reality applications, an image data stream is generated from data representing the scene such that the image data stream reflects the user's (virtual) position in the scene. Such an image data stream is typically generated dynamically and in real time such that it reflects the user's movement within the virtual scene. The image data stream may be provided to a renderer which renders images to the user from the image data of the image data stream. In many applications, the provision of the image data stream to the renderer is via a bandwidth limited communication link. For example, the image data stream may be generated by a remote server and transmitted to the rendering device e.g. over a communication network.

However, a problem for e.g. such applications is that they require a very high data rate for most practical applications. For example, it has been proposed to provide a virtual reality experience based on 360° video streaming where a full 360° view of a scene is provided by a server for a given viewer position thereby allowing the client to generate views for different directions. However, this results in an extremely high data rate which is not desirable or available in most practical applications.

Specifically, one of the promising applications of virtual reality (VR) is omnidirectional video (e.g. VR360 or VR180). Here the complete video from a particular viewpoint is mapped onto one (or more) rectangular windows (e.g. using an ERP projection). MPEG has standardized this approach and has also foreseen that it eventually will lead to very high data rates.

It has been proposed to divide the view sphere into a few predetermined tiles and then transmit these to the client at different quality levels. However, this still typically results in a very high data rate and further tends to degrade the quality that is achieved for the rendered images presented to the user. For MPEG VR360 and VR180, it is possible to request only the part ('tile') one is looking at (at that moment) in full resolution and quality and with the remainder (surrounding) part in low resolution. However, this still requires a high data rate and as the viewing angle of a typical virtual reality goggle/ headset is quite high (-100degrees horizontally) compared to e.g. HDTV (-30 degrees horizontally), the video data rate will also be much higher (e.g. 10 times) then for HDTV.

Hence, an improved approach would be advantageous. In particular, an approach that allows improved operation, increased flexibility, an improved virtual reality experience, reduced data rates, facilitated distribution, reduced complexity, facilitated implementation, reduced storage requirements, increased image quality, and/or improved performance and/or operation would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for generating an image data stream representing views of a scene, the apparatus comprising: a receiver for receiving a gaze indication indicative of both a head pose and a relative eye pose for a viewer, the head pose including a head position and the relative eye pose being indicative of an eye pose relative to the head pose; a determiner for determining a visual attention region in the scene corresponding to the gaze indication; a generator for generating the image data stream to comprise image data for the scene where the image data is generated to include at least first image data for the visual attention region and second image data for the scene outside the visual attention region; where the generator is arranged to generate the image data to have a higher quality level for the first image data than for the second image data.

The invention may provide improved and/or more practical image data for a scene in many embodiments. The approach may in many embodiments provide image data highly suitable for a flexible, efficient, and high performance Virtual Reality (VR) applications. In many embodiments, it may allow or enable a VR application with a substantially improved trade-off between image quality and data rate. In many embodiments, it may allow an improved perceived image quality and/or a reduced data rate. The approach may be particularly suited to e.g. VR applications in which data representing a scene is stored centrally and potentially supporting a plurality of remote VR clients.

The gaze indication may be indicative of a gaze point of a viewer. The head pose and relative eye pose in combination may correspond to a gaze point, and the gaze indication may for example indicate a position in the scene corresponding to this gaze point.

In many embodiments, the visual attention region may be a region corresponding to the gaze point. In particular, the visual attention region may be determined as a region of the scene meeting a criterion with respect to a gaze point indicated by the gaze indication. The criterion may for example be a proximity requirement.

The image data stream may comprise video data for viewports corresponding to the head pose. The first and second image data may be image data for the viewports. The second data may be image data for at least part of an image corresponding to a viewing area from the head pose.

The image data stream may be a continuous data stream and may e.g. be a stream of view images and/or a stream of three dimensional data. The image quality level may in many embodiments be equal to a (spatial and /or temporal) data rate. Specifically, the generator may be arranged to generate the image data to have a higher quality level for the first image data than for the second image data in the sense that it may be arranged to generate the image data to have a higher data rate for the first image data than for the second image data.

The visual attention region may be a three dimensional region in the scene. The gaze indication may include an indication of a distance from a position of the head pose to a gaze point.

The determiner may be arranged to determine the visual attention region in response to contents of the scene corresponding to the gaze indication.

The scene may be a virtual scene and may specifically be an artificial virtual scene, or may e.g. be a captured real world scene, or an augmented reality scene.

In accordance with an optional feature of the invention, the determiner is arranged to determine the visual attention region to have an extension in at least one direction of no more than 10 degrees for the head pose.

This may provide improved performance in many embodiments. The visual attention region may be determined to have a very small extension and specifically to be much lower than the viewing angle of a user, and much lower than typical display view angles when used for presenting images of a scene to a user. For example, VR headsets typically provide view angles of around 100°. The Inventors have realized that perceived image quality will not be (significantly or typically noticeably) affected by a quality level being reduced outside of a narrow viewing angle.

In some embodiments, the determiner may be arranged to determine the visual attention region to have a horizontal extension of no more than 10 degrees for the head pose. In some embodiments, the determiner may be arranged to determine the visual attention region to have a vertical extension of no more than 10 degrees for the head pose.

In accordance with an optional feature of the invention, the visual attention region corresponds to a scene object.

This may provide improved performance in many embodiments.

In accordance with an optional feature of the invention, the determiner is arranged to track movement of the scene object in the scene and the determiner is arranged to determine the visual attention region in response to the tracked movement.

This may provide improved performance in many embodiments and may in particular typically allow a visual attention region to be determined which more closely corresponds to the users actual current focus.

In accordance with an optional feature of the invention, the determiner is arranged to determine the visual attention region in response to stored user viewing behavior for the scene.

This may provide improved performance in many embodiments and may in particular typically allow a visual attention region to be determined which more closely corresponds to the users actual current focus.

In accordance with an optional feature of the invention, the determiner is arranged to bias the visual attention region towards regions of the scene for which the stored user viewing behavior indicates a higher view frequency.

This may typically provide an improved determination of the visual attention region and may provide improved performance.

The determiner may be arranged to bias the visual attention region towards regions of the scene for which the stored user viewing behavior indicates a higher view frequency relative to regions of the scene for which the stored user viewing behavior indicates a lower view frequency.

A higher view frequency for a region/ object may reflect that the region/ object has been the subject of the user's visual attention more than for a region/object for which the view frequency is lower.

In accordance with an optional feature of the invention, the determiner is arranged to determine a predicted visual attention region in response to relationship data indicative of previous viewing behavior relationships between different regions of the scene; and wherein the generator is arranged to include third image data for the predicted visual attention region in the image data stream; and the generator is arranged to generate the image data to have a higher quality level for the third image data than for the second image data outside the predicted visual attention region.

This may provide improved performance in many embodiments. Specifically, it may in many embodiments allow improved perceived image quality without interruptions or lag for many typical user behaviors.

The determiner may be arranged to determine a predicted visual attention region in response to relationship data indicating a high view correlation between views of the current visual attention region and the predicted visual attention region.

In accordance with an optional feature of the invention, the relationship data is indicative previous gaze shifts by at least one viewer; and the determiner is arranged to determine the predicted visual attention region as a first region of the scene for which the relationship data is indicative of a frequency of gaze shifts from the visual attention region to the first region that exceeds a threshold.

This may provide improved performance in many embodiments.

In accordance with an optional feature of the invention, the determiner is arranged to determine a predicted visual attention region in response to movement data of a scene object corresponding to the visual attention region; and wherein the generator is arranged to include third image data for the predicted visual attention region; where the generator is arranged to generate the image data to have a higher quality level for the third image data than for the second image data outside the predicted visual attention region.

This may provide improved performance in many embodiments.

In accordance with an optional feature of the invention, the generator is arranged to generate the image data stream as a video data stream comprising images corresponding to viewports for the viewing pose.

This may provide a particularly advantageous approach in many embodiments, including many embodiments in which a VR experience is provided from a remote server. It may e.g. reduce complexity in the VR client while still maintaining a relatively low data rate requirement.

In accordance with an optional feature of the invention, the determiner is arranged to determine a confidence measure for the visual attention region in response to a correlation between movement of the visual attention region in the scene and changes in the gaze indication; and the generator is arranged to determine the quality for the first image data in response to the confidence measure.

In accordance with an optional feature of the invention, the apparatus comprises a virtual reality processor arranged to execute a virtual reality application for the virtual scene where the virtual reality application is arranged to generate the gaze indication and to render an image corresponding to a viewport for the viewer from the image data stream.

In accordance with an optional feature of the invention, where the apparatus is further arranged to receive the gaze indication from a remote client and to transmit the image data stream to the remote client.

In accordance with an optional feature of the invention, the determiner is arranged to determine the visual attention region in response to a gaze distance indication of the gaze indication.

According to an aspect of the invention there is provided a method of generating an image data stream representing views of a scene, the method comprising: receiving a gaze indication indicative of both a head pose and a relative eye pose for a viewer, the head pose including a head position and the relative eye pose being indicative of an eye pose relative to the head pose; determining a visual attention region in the scene corresponding to the gaze indication; generating the image data stream to comprise image data for the scene where the image data is generated to include at least first image data for the visual attention region and second image data for the scene outside the visual attention region; the image data having a higher quality level for the first image data than for the second image data.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of client server arrangement for providing a virtual reality experience;
FIG. 2 illustrates an example of elements of an apparatus in accordance with some embodiments of the invention; and
FIG. 3 illustrates an example of view images that may be generated by some implementations of the apparatus of FIG. 2.

### DETAILED DESCRIPTION OF THE EMBODIMENTS

Virtual experiences allowing a user to move around in a virtual world are becoming increasingly popular and services are being developed to satisfy such a demand. However, provision of efficient virtual reality services is very challenging, in particular if the experience is to be based on a capture of a real world environment rather than on a fully virtually generated artificial world.

In many virtual reality applications, a viewer pose input is determined reflecting the pose of a virtual viewer in the scene. The virtual reality apparatus/ system/ application then generates one or more images corresponding to the views and viewports of the scene for a viewer corresponding to the viewer pose.

Typically, the virtual reality application generates a three-dimensional output in the form of separate view images for the left and the right eyes. These may then be presented to the user by suitable means, such as typically individual left and right eye displays of a VR headset. In other embodiments, the image may e.g. be presented on an autostereoscopic display (in which case a larger number of view images may be generated for the viewer pose), or indeed in some embodiments only a single two-dimensional image may be generated (e.g. using a conventional two-dimensional display).

The viewer pose input may be determined in different ways in different applications. In many embodiments, the physical movement of a user may be tracked directly. For example, a camera surveying a user area may detect and track the user's head (or even eyes). In many embodiments, the user may wear a VR headset which can be tracked by external and/or internal means. For example, the headset may comprise accelerometers and gyroscopes providing information on the movement and rotation of the headset and thus the head. In some examples, the VR headset may transmit signals or comprise (e.g. visual) identifiers that enable an external sensor to determine the movement of the VR headset.

In some systems, the viewer pose may be provided by manual means, e.g. by the user manually controlling a joystick or similar manual input. For example, the user may manually move the virtual viewer around in the scene by controlling a first analog joystick with one hand and manually controlling the direction in which the virtual viewer is looking by manually moving a second analog joystick with the other hand.

In some applications a combination of manual and automated approaches may be used to generate the input viewer pose. For example, a headset may track the orientation of the head and the movement/ position of the viewer in the scene may be controlled by the user using a joystick.

The generation of images is based on a suitable representation of the virtual world/ environment/ scene. In some applications, a full three-dimensional model may be provided for the scene and the views of the scene from a specific viewer pose can be determined by evaluating this model. In other systems, the scene may be represented by image data corresponding to views captured from different capture poses. For example, for a plurality of capture poses, a full spherical image may be stored together with three dimensional (depth data). In such approaches, view images for other poses than the capture poses may be generated by three dimensional image processing, such as specifically using view shifting algorithms. In systems wherein the scene is described/ referenced by view data stored for discrete view points/ positions/ poses, these may also be referred to as anchor view points/ positions/ poses. Typically when a real world environment has been captured by capturing images from different points/ positions/ poses, these capture points/ positions/ poses are also the anchor points/ positions/ poses.

A typical VR application accordingly provides (at least) images corresponding to viewports for the scene for the current viewer pose with the images being dynamically updated to reflect changes in the viewer pose and with the images being generated based on data representing the virtual scene/ environment/ world.

In the field, the terms placement and pose are used as a common term for position and/or direction/ orientation. The combination of the position and direction/ orientation of e.g. an object, a camera, a head, or a view may be referred to as a pose or placement. Thus, a placement or pose indication may comprise six values/ components/ degrees of freedom with each value/ component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom).

Many VR applications are based on a pose having the maximum degrees of freedom, i.e. three degrees of freedom of each of the position and the orientation resulting in a total of six degrees of freedom. A pose may thus be represented by a set or vector of six values representing the six degrees of freedom and thus a pose vector may provide a three-dimensional position and/or a three-dimensional direction indication. However, it will be appreciated that in other embodiments, the pose may be represented by fewer values.

A system or entity based on providing the maximum degree of freedom for the viewer is typically referred to as having 6 Degrees of Freedom (6DoF). Many systems and entities provide only an orientation or position and these are typically known as having 3 Degrees of Freedom (3DoF).

In some systems, the VR application may be provided locally to a viewer by e.g. a stand alone device that does not use, or even have any access to, any remote VR data or processing. For example, a device such as a games console may comprise a store for storing the scene data, input for receiving/ generating the viewer pose, and a processor for generating the corresponding images from the scene data.

In other systems, the VR application may be implemented and performed remote from the viewer. For example, a device local to the user may detect/ receive movement/ pose data which is transmitted to a remote device that processes the data to generate the viewer pose. The remote device may then generate suitable view images for the viewer pose based on scene data describing the scene data. The view images are then transmitted to the device local to the viewer where they are presented. For example, the remote device may directly generate a video stream (typically a stereo/ 3D video stream) which is directly presented by the local device. Thus, in such an example, the local device may not perform any VR processing except for transmitting movement data and presenting received video data.

In many systems, the functionality may be distributed across a local device and remote device. For example, the local device may process received input and sensor data to generate viewer poses that are continuously transmitted to the remote VR device. The remote VR device may then generate the corresponding view images and transmit these to the local device for presentation. In other systems, the remote VR device may not directly generate the view images but may select relevant scene data and transmit this to the local device which may then generate the view images that are presented. For example, the remote VR device may identify the closest capture point and extract the corresponding scene data (e.g. spherical image and depth data from the capture point) and transmit this to the local device. The local device may then process the received scene data to generate the images for the specific, current view pose. The view pose will typically correspond to the head pose, and references to the view pose may typically equivalently be considered to correspond to the references to the head pose.

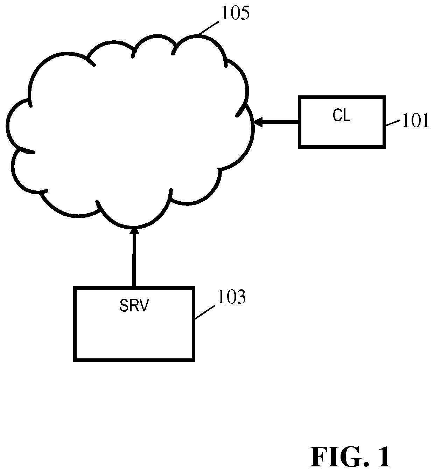

FIG. 1 illustrates such an example of a VR system in which a remote VR server 101 liaises with a client VR server 103 e.g. via a network 105, such as the Internet. The server 103 may be arranged to simultaneously support a potentially large number of client devices 101.

Such an approach may in many scenarios provide an improved trade-off e.g. between complexity and resource demands for different devices, communication requirements etc. For example, the viewer pose and corresponding scene data may be transmitted with larger intervals with the local device processing the viewer pose and received scene data locally to provide a real time low lag experience. This may for example reduce the required communication bandwidth substantially while providing a low lag experience and while allowing the scene data to be centrally stored, generated, and maintained. It may for example be suitable for applications where a VR experience is provided to a plurality of remote devices.

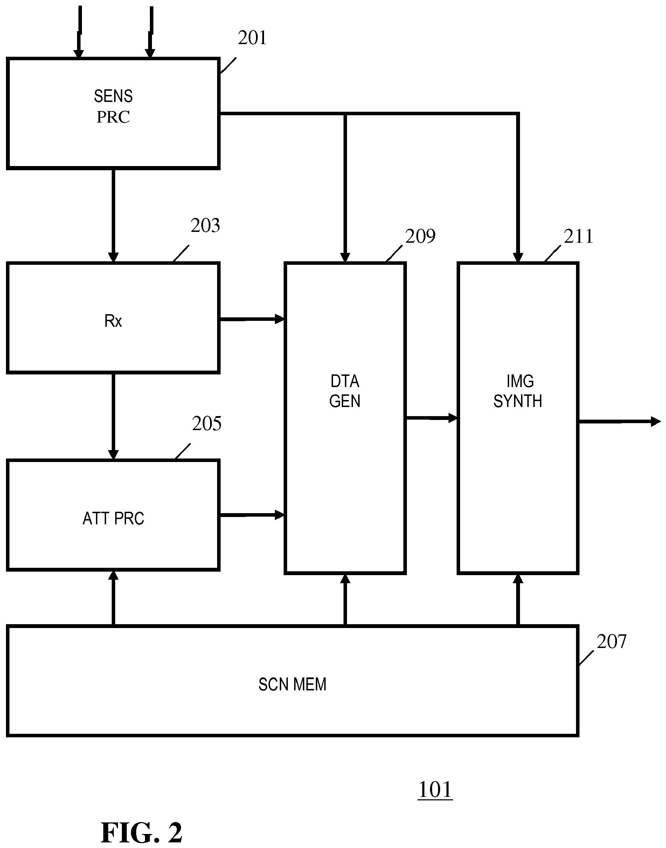

FIG. 2 illustrates elements of an apparatus that may provide an improved virtual reality experience in many scenarios in accordance with some embodiments of the invention. The apparatus may generate an image data stream to correspond to viewer poses based on data characterizing a scene.

In some embodiments, the apparatus comprises a sensor input processor 201 which is arranged to receive data from sensors detecting the movement of a viewer or equipment related to the viewer. The sensor input is specifically arranged to receive data which is indicative of a head pose of a viewer. In response to the sensor input, the sensor input processor 201 is arranged to determine/estimate a current head pose for the viewer as will be known by the skilled person. For example, based on acceleration and gyro sensor data from a headset, the sensor input processor 201 can estimate and track the position and orientation of the headset and thus the viewer's head. Alternatively or additionally, a camera may e.g. be used to capture the viewing environment and the images from the camera may be used to estimate and track the viewer's head position and orientation. The following description will focus on embodiments wherein the head pose is determined with six degrees of freedom but it will be appreciated that fewer degrees of freedom may be considered in other embodiments.

In addition to head pose related data, the sensor input processor 201 further receives input sensor data which is dependent on the relative eye pose of the viewers eyes. From this data, the sensor input processor 201 can generate an estimate of the eye pose(s) of the viewer relative to the head. For example, the VR headset may include a pupil tracker which detects the orientation of each of the user's eyes relative to the VR headset, and thus relative to the head pose. Based on the eye sensor input data, the sensor input processor 201 may determine a relative eye pose indicator which is indicative of the eye pose of the viewer's eyes relative to the head pose. In many embodiments, the relative eye pose(s) may be determined with six degrees of freedom but it will be appreciated that fewer degrees of freedom may be considered in other embodiments. In particular, the eye pose indicator may be generated to only reflect the eye orientation relative to the head and thus the head pose. This may in particular reflect that position changes of the eye/ pupil relatively to the head tend to be relatively negligible.

As a specific example, the user may wear VR goggles or a VR headset comprising infrared eye tracker sensors that can detect the eye movement relative to the goggles/ headset.

The sensor input processor 201 is arranged to combine the head pose indicator and the eye pose indicator to generate a gaze indication. The point where the optical axes of the eyes meet is known as the gaze point and the gaze indication is indicative of this gaze point. The gaze indication may specifically indicate a direction to the gaze point from the current viewer position and may typically be indicative of both the direction and distance to the gaze point. Thus, in many embodiments, the gaze indicator is indicative of a distance to the gaze point (relative to the viewer position).

In the example, the gaze indication may be determined as at least a direction, and typically as a position, of the gaze point based on tracking the eye pose and thus determining the convergence of the optical axes of the eyes.

The apparatus of FIG. 2 further comprises a receiver 203 which is arranged to receive the gaze indication from the sensor input processor 201. As described above the gaze indication is not only indicative of a head pose but is indicative of a gaze point and reflects both head position and relative eye pose.

The receiver 203 is coupled to a visual attention processor 205 which is arranged to determine a visual attention region in the scene corresponding to the gaze indication. The visual attention region reflects the viewer's visual attention or focus as indicated by the gaze indication, i.e. it can be considered to reflect where the viewer is "looking" and focusing his visual attention. The visual attention region may considered to be a region within the scene to which the viewer is currently paying attention.

The visual attention processor 205 may determine a region in the scene such that the region meets a criterion with respect to the gaze indication. This criterion may specifically include a proximity criterion, and this proximity criterion may require that a distance metric between parts of the region and a gaze point indicated by the gaze indication being below a threshold. As the determined region is one that is determined in consideration of the gaze indication it is by the system assumed to be indicative of an increased probability that the user is focusing his attention on this region. Accordingly, by virtue of the region being determined in consideration of the gaze indication, it is considered to be useful as an indication of a probably visual attention of the user and it is accordingly a visual attention region.

The visual attention region may typically be generated as a region comprising the gaze point and is typically generated as a region comprising the gaze point or being very close to this. It will be appreciated that different approaches and criteria can be used to determine a visual attention region corresponding to the gaze point. As will be described in more detail later, the visual attention region may for example be determined as an object in the scene close to the gaze point as indicated by the gaze indication. For example, if an estimated distance between a scene object and the gaze point is less than a given threshold and the scene object is the closest scene object to this gaze point, then this scene object may be determined as the visual attention region.

The visual attention region is accordingly a region in the scene and refers to the world or scene. The visual attention region is not merely determined as a given area of a viewport for the viewer but rather defines a region in the scene itself. In some embodiments, the visual attention region may be determined as a two dimensional region but in most embodiments the visual attention region is not only defined by e.g. azimuth and elevation intervals with respect to the viewing position but often includes a distance/ depth value or interval. For example, the visual attention region may be determined as a region formed by three intervals defining respectively an azimuth range, an elevation range, and a distance range. As another example, the visual attention region may be determined in the scene/world coordinate system as ranges of three spatial components (e.g. the visual attention region may be determined as a rectangular prism or cuboid defined by an x-component range, a y-component range, and a z-component range). In some embodiments, the visual attention region may be determined as the three-dimensional shape of a scene object sufficiently close (or comprising) the gaze point.

The visual attention region is typically determined as a region that has a three-dimensional relationship to the viewer pose. In other words, the visual attention region may with respect to the viewer pose be determined not only as e.g. an area of view port or sphere from the view pose but will also have a distance to the view pose. The visual attention processor 205 is accordingly arranged to determine the visual attention region in response to a gaze distance indication of the gaze indication. Thus, it is not only the direction of the gaze which is considered when determining the visual attention region but the visual attention region will also be determined to be dependent on the distance from the view pose to the gaze point.

In some embodiments, the visual attention region may depend only on the gaze indication but in many embodiments, it may further be determined by considering the contents of the scene, such as e.g. which scene objects correspond to the current gaze point. Accordingly, the visual attention processor 205 is coupled to a scene store 207 which comprises the scene data describing the scene/ world. This scene data may for example be stored as a three-dimensional model but will in many embodiments be in the form of three-dimensional view image data for a number of capture/ anchor positions.

The apparatus further comprises an image data generator 209 which is coupled to the visual attention processor 205, the scene store 207, and in the example also to the sensor input processor 201. The image data generator 209 is arranged to generate an image data stream representing views of the scene. In the example of FIG. 2, the image data generator 209 receives a viewer pose from the sensor input processor 201. In the example, the viewer pose is indicative of the head pose and the image data generator 209 is arranged to generate image data for rendering views corresponding to the viewer pose. Thus, in the specific example, the image data generator 209 generates image data in response to the viewer head pose.

In some embodiments, the image data generator 209 may directly generate view images corresponding to viewports for the view pose. In such embodiments, the image data generator 209 may accordingly directly synthesize view images that can be directly rendered by a suitable VR device. For example, the image data generator 209 may generate video streams comprising stereo images corresponding to the left and right eyes of a viewer for the given view position. The video streams may e.g. be provided to a renderer that directly feeds or controls a VR headset, and the view image video streams may be presented directly.

However, in the example of FIG. 2, the image data generator 209 is arranged to generate the image data stream to comprise image data for synthesizing view images for the viewer pose (and specifically for the head pose).

Specifically, in the example, the image data generator 209 is coupled to an image synthesizer 211 which is arranged to synthesize view images for a viewer pose in response to the image data stream received from the image data generator 209. The image data stream may specifically be selected to include three-dimensional image data that is close to or directly corresponds to the viewer pose. The image synthesizer 211 may then process this to synthesize view images for the viewer pose that can be presented to the user.

This approach may for example allow the image data generator 209 and the image synthesizer 211 to operate at different rates. For example, the image data generator 209 may be arranged to evaluate a new viewer pose with a low frequency, e.g., say. once per second. The image data stream may accordingly be generated to have three-dimensional image data corresponding to this viewer pose, and thus the three dimensional image data for the current viewer pose may be updated once per second.

In contrast, the image synthesizer 211 may synthesize view images for the viewports of the current view pose much faster, e.g. new images may be generated and provided to the user e.g. 30 times per second. The viewer will accordingly experience a frame rate of 30 frames per second. Due to the user movement, the view pose for the individual view image/ frame may deviate from the reference view pose for which the image data generator 209 generated the image data and thus the image synthesizer 211 may perform some view shifting etc.

The approach may accordingly allow the image data generator 209 to operate much slower and essentially the real time operation may be restricted to the image synthesizer 211. This may reduce complexity and resource demand for the image data generator 209. Further, the complexity and resource requirements for the image synthesizer 211 is typically relatively low as the view shifts tend to be relatively small and therefore even low complexity algorithms will tend to result in sufficiently high quality. Also, the approach may substantially reduce the required bandwidth for the connection/ link between the image data generator 209 and the image synthesizer 211. This may be an important feature, especially in embodiments where the image data generator 209 and the image synthesizer 211 are located remote from each other, such as for example in the VR server 101 and the VR client 103 of FIG. 1 respectively.

The image data generator 209 generates the image data based on the scene data extracted from the scene store 207. As a specific example, the scene store 207 may comprise image data for the scene from a potentially large number of capture or anchor points. For example, for a large number of positions in the scene, the scene store 207 may store a full spherical image with associated depth data. The image data generator 209 may in such a situation determine the anchor point closest to the current viewer pose received from the sensor input processor 201. It may then extract the corresponding spherical image and depth data and transmit these to the image synthesizer 211. However, typically, the image data generator 209 will not transmit the entire spherical image (and depth data) but will select a suitable fraction of this for transmission. Such a fraction may be referred to as a tile. A tile will typically reflect a very substantial fraction of the spherical image, such as e.g. between a 1/16 and an 1/64 of the area. Indeed, the tile will typically be larger than the view port for the current view pose. The tile that is selected may be determined from the orientation of the view pose.

It will be appreciated that in some embodiments, the image synthesizer 211 may be considered to be comprised in the image data generator 209 and the image data generator 209 may directly generate an image data stream comprising view images for viewports of the user (e.g. corresponding to the output of the image synthesizer 211 of FIG. 2. In other words, in some embodiments the functionality of the image stream generator 1207 and image synthesizer 211 described with reference to FIG. 2 may equally apply to a combined implementation in other embodiments wherein the functionality of the image data generator 209 and the image synthesizer 211 are integrated into a single functional entity directly generating an output data stream comprising direct view images for a viewer/ user).

In the apparatus of FIG.2, the image data generator 209 is further coupled to the visual attention processor 205 from which it receives information of the determined visual attention region. The image data generator 209 is arranged to adapt the quality of different parts of the generated image data in response to the visual attention region. Specifically, the image data generator 209 is arranged to set the quality such that the quality is higher for the visual attention region than (at least some parts) outside of the visual attention region. Thus, the image data generator 209 may generate the image data to have a varying image quality with the image quality of the generated image data for the visual attention region is higher than for (at least part of the) image data representing the outside the visual attention region.

As an example, based on the received viewer pose, the image data generator 209 may identify the closest capture position and retrieve the spherical image and depth data for that position. The image data generator 209 may then proceed to determine a tile (e.g. a 120° azimuth and 90° elevation tile comprising the viewer pose). It my then proceed to determine an area within the tile which corresponds to the visual attention region. Specifically, it may identify a portion of the tile which represents the visual attention region. For example, if the visual attention region corresponds to a scene object, the image data generator 209 may identify an area in the tile which includes the scene object. The image data generator 209 may then proceed to generate the image data for the tile but such that the quality of the image data for the identified area is higher than for the rest of the tile. The resulting image data is then included in the image data stream and fed to the image synthesizer 211.

An advantage of using tiles is that they may typically be represented by pre-encoded videos (called "Tracks" in DASH) which can then be selected for transmission without requiring per client encoding or transcoding. The described approach may be suitable for use with such tiles. In particular, in many embodiments the image data generator 209 may for a given tile process the tile before transmission such that the processing reduces the data rate for the tile except for the specific area corresponding to the visual attention region. Accordingly, a resulting tile is generated and transmitted which has a high quality (data rate) for the specific area currently estimated to have the viewer's visual attention and with a lower quality (data rate) for the rest of the tile.

In other embodiments, a larger number of smaller tiles may be stored with different qualities. For example, each tile may correspond to a view angle of no more than 10°. A larger combined tile may then be formed by selecting high quality tiles for an area corresponding to the visual attention region and lower quality tiles for the remainder of the combined tile.

In embodiments where the image data generator 209 directly generates viewport images for presentation to a user, the areas in the viewport images that correspond to the visual attention region may be generated with a higher quality (spatial and/or temporal data rate) than for the areas of the viewport outside the visual attention region (e.g. the above comments can be considered to be applicable but with the tiles being selected to correspond to the view port(s) for the head pose).

It will be appreciated that different approaches for changing the image quality of image data is known to the skilled person and that any suitable approach may be used. In many embodiments, the variation of data rate (spatial and/or temporal) may be correspond to a variation of the image quality. Thus, in many embodiments, the image data generator 209 may be arranged to generate the image data to have a higher data/bit rate for the first image data than for the second image data. The variation in data/bit rate may be a spatial and/or temporal data/ bit rate. Specifically, the image data generator 209 may be arranged to generate the image data to have a more bits per area and/or more bits per second for the first image data than for the second image data.

The image data generator 209 may for example re-encode (transcode) the data retrieved from the scene store 207 to a lower quality level for areas outside the area of the visual attention region and then transmitting the lower quality version. In other embodiments, the scene store 207 may comprise two different encoded versions of images for different capture points, and the image data generator 209 may generate the different qualities by selecting data from the different versions for respectively the area of the visual attention region and for the remaining part of the tile.

It will be appreciated that image data generator 209 may vary the quality level by adjusting different parameters such as the spatial resolution, temporal resolution, compression level, quantization level (word length) etc. For example, the higher quality level is achieved by at least one of: a higher frame rate; a higher resolution; a longer word length; and a reduced image compression level.

Thus, the image data generator 209 generates an image data stream in which the image quality for the visual attention region is higher than outside. Thus, a specific part of the scene is identified based on the gaze point, and thus reflect both the head pose and the relative eye pose, and this part is represented at a higher quality. The high quality is accordingly provided for a scene part, and typically scene object, which it is likely that the viewer is focusing on.

The approach may provide a differentiated approach wherein the visual attention region may correspond to a small area of the viewport for the viewer and which is presented at a possibly substantially higher quality level than the viewport as a whole. A significant feature of the approach is that the high quality area/ region corresponding to the visual attention region may form a very small part of the entire viewport/ area. Indeed, in many embodiments, the visual attention processor 205 is arranged to determine the visual attention region to have a horizontal extension of no more than 10° (or in some embodiments even 5°) for a viewer position of the viewer. Thus, the visual attention region may correspond to less than 10° (or 5°) of the viewer's view (and viewport) and therefore the increased quality is restricted to a very small region. Similarly, in many embodiments, the visual attention processor 205 is arranged to determine the visual attention region to have a vertical extension of no more than 10° (or in some embodiments even 5°) for a viewer position of the viewer.

Indeed, the Inventors have realized that human quality perception is very limited and specific, and that by providing a high quality in a specific small view interval corresponding to the scene content at the viewers current gaze point in the scene, the viewer will perceive the whole viewport to be presented at high quality. The Inventors have further realized that this may be used to substantially reduce the data rate in a VR application by tracking the users gaze in the scene and adapting the quality levels accordingly.

Indeed, in many scenarios, the angle for which humans fully perceive sharpness/ quality may be very low, and often in the region of just one or a few degrees. However, by determining a larger area to have improved quality, it can be achieved that fewer updates of the relevant area are necessary thereby facilitating adaptation and transmission of higher quality areas. In practice, it has in many embodiments been found that an extension in the order of 5-10° provide a highly advantageous trade-off.

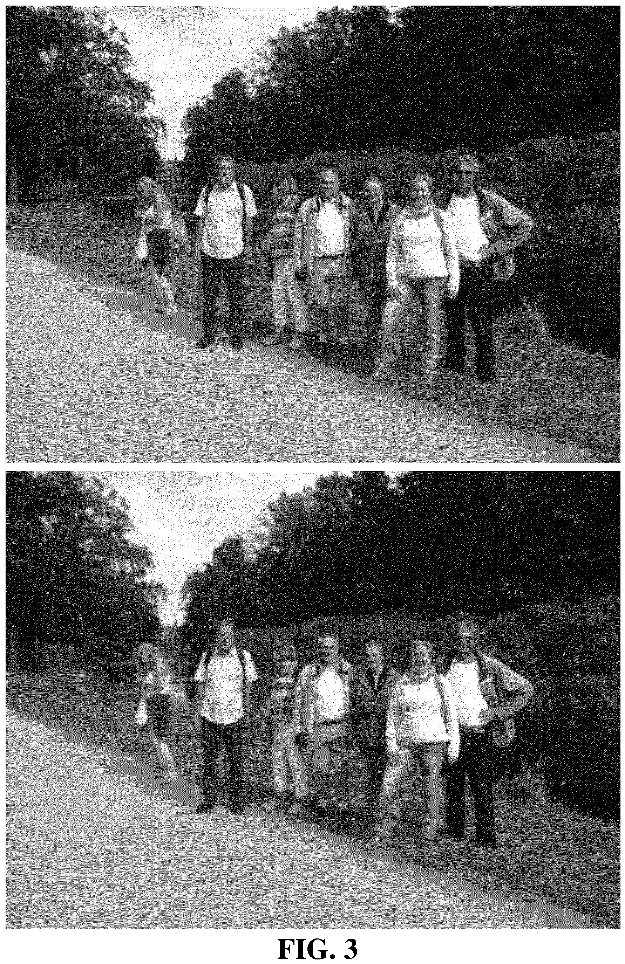

The effect of the approach can be exemplified by the pictures in FIG. 3 in which the upper picture shows a possible view image with the same (high) quality for the entire view point. The lower picture is an example of a possible view image that may be generated by the apparatus of FIG. 2. In this example, a visual attention region corresponding to the user's current gaze has been identified around the three people on the right. In this example, the quality of a corresponding area (in the example -1/3 x 1/3 of the full area) around these three people have been maintained at the same high level as in the upper picture but the quality has been reduced for the remaining image (e.g. by transcoding with a higher compression level). When looking at the two pictures, it is clear to see the quality difference. However, for a user who is visually focusing on the three people on the left, no quality difference will typically be noted. Indeed, tests have been performed wherein the two pictures have been overlayed on a display such that the display could quickly switch between the images without any spatial variations. When the test objects focused on the area corresponding to the visual attention region (i.e. the three people on the left), no quality difference was perceived between the two images.

The apparatus of FIG. 2 may in many embodiments be implemented in a single device, such as for example a games console, local to the viewer. However, in many other embodiments, elements of the apparatus may be remote from the viewer. For example, in many embodiments, a client/ server approach such as that of FIG. 1 may be employed with some elements of FIG. 2 being located in the client device and some in the server.

For example, in many embodiments, the receiver 203, visual attention processor 205, scene store 207, and image data generator 209 may be located in the server 103. The elements may be shared between a plurality of servers and thus may support a plurality of simultaneous VR applications based on centralized scene data.

In many embodiments, the image data generator 209 may be located in the server 103 and the image synthesizer 211 may be located in the client. This will allow the server 103 to continuously provide 3D image data that can be used locally to make (small) adjustments to accurately generate view images that correspond to the current view pose. This may reduce the required data rate. However, in other embodiments, the image synthesizer 211 may be located in the server 103 (and indeed the functionality of the image data generator 209 and the image synthesizer 211 may be combined) and the server 103 may directly generate view images that can directly be presented to a user. The image data stream transmitted to the server 103 may thus in some cases comprise 3D image data which can be processed locally to generate view images and may in other cases directly include view images for presentation to the user.

In many embodiments, the sensor input processor 201 is comprised in the client 101 and the receiver 203 may be comprised in the server 103. Thus, the client 101 may receive and process input data from e.g. VR headset to generate a single combined gaze indication which is then transmitted to the receiver 203. In some embodiments, the client 101 may directly forward the sensor input (possibly partially processed) or individual eye pose and head pose data to the server 103 which then can determine a combined gaze indication. Indeed, the gaze indication can be generated as a single value or vector indicating e.g. a position in the scene, or may e.g. be represented by a combination of separate parameters, such as a separate representation of a head pose and a relative eye pose.

The visual attention processor 205 may use different algorithms and criteria to select the visual attention region in different embodiments. In some examples, it may define a three-dimensional visual attention region in the scene, and specifically may determine the visual attention region as a predetermined region in the scene comprising, or centered on, the position of the gaze point indicated by the gaze indication.

For example, the gaze indication may directly indicate a point in the scene, e.g. given as a rectangular coordinate (x,y,z) or as a polar coordinate (azimuth, elevation, distance). The visual attention region may then be determined as a prism of a predetermined size centered on the gaze point.

However, in many embodiments, the visual attention processor 205 is arranged to determine the visual attention region in response to contents of the scene corresponding to the gaze indication.

The visual attention processor 205 may in many embodiments evaluate the scene around the gaze point. For example, the visual attention processor 205 may identify a region around the gaze point having the same visual properties, such as for example the same color and/or intensity. This region may then be considered as the visual attention region. As a specific example, the gaze point may be provided as a three-dimensional vector relative to a current view position (e.g. the head position indicated by the head pose). The visual attention processor 205 may select a captured 3D image based on the head pose and determine the gaze point relative to the capture point of the 3D image. It may then determine a part of the 3D image which corresponds to the determined gaze point and evaluate whether this is part of a visually homogenous region. If so, this region may be determined as the visual attention region, e.g. subject to a maximum size.

In many embodiments, the visual attention processor 205 may determine the visual attention region to correspond to a scene object. E.g., if the gaze point is sufficiently close to, or directly matches the position of such an object, the visual attention processor 205 may set the visual attention processor 205 to correspond to the object.

In some embodiments, the system may have explicit information of scene objects such as for example explicit information of the position in the scene of a person. If the gaze point is detected to be sufficiently close the person, it may be assumed that the viewer is effectively looking at this person, and therefore the visual attention processor 205 may set the visual attention region to correspond to the person. If for example, the rough outline of the person is known (e.g. by the VR system using a model based approach), the visual attention processor 205 may proceed to determine the visual attention region as a bounding box that comprises the person. The size of such a box may be selected to ensure that the entire person is within the box, and may e.g. be determined to correspond to a desired viewing angle (e.g. 5°).

As another example, if the scene data is comprised of 3D image data from different capture points, the visual attention processor 205 may dynamically determine a scene object as e.g. a region corresponding to the gaze point and having a homogeneous color and being within a narrow/ limited depth range. For example, the visual attention processor 205 may include face detection which automatically can detect a face in the captured image data. The visual attention region may then be set to correspond to this dynamically detected scene object.

In many embodiments, the visual attention processor 205 may further comprise a tracker which is arranged to track movement of the scene object in the scene and the visual attention region may be determined in response to the tracked movement. This may provide a more accurate determination of a suitable visual attention region. For example, it may be known or estimated that an object is moving in the scene (e.g. a car is driving, a ball is moving etc.). The characteristics of this movement may be known or estimated. Specifically, a direction and speed for the object in the scene may be determined. If the visual attention processor 205 determines a visual attention region corresponding to this moving object, the visual attention processor 205 may then track the movement to see if this matches the changes in the gaze indication. If so, it is assumed that the viewer is looking at the object and is following the motion/ tracking the object, and the visual attention region is maintained as corresponding to the object. However, if the gaze indication does not follow the movement of the object, the visual attention processor 205 may determine that the object is not suitable as a visual attention region and may therefore proceed to select a different visual attention region, or determine that there currently is no maintained visual attention, and thus that it is not appropriate to determine a visual attention region (in which the whole tile may e.g. be transmitted at an intermediate resolution (e.g. with a corresponding total data rate as when a high quality visual attention region image data and low quality non-visual attention region image data is transmitted).

The approach may provide additional temporal consistency and may allow the visual attention processor 205 to determine a visual attention region more closely reflecting the user's attention.

In many embodiments, the visual attention processor 205 may be arranged to determine the visual attention region by considering visual attention regions determined for previous gaze indications and/or viewer poses. For example, the current visual attention region may be determined to match the previous one. As a specific case, the determination of a visual attention region may typically be subject to a low pass filtering effect, i.e. the same scene area may be selected as the visual attention region for subsequent gaze indications as long as these do not differ too much from the previous gaze indications.

The system may provide a "snap" effect wherein the visual attention region is linked to e.g. a scene object as long as the correlation between the changes in gaze point and the movement of the object matches sufficiently closely (in accordance with a suitable criterion). This selection of the scene object as the visual attention region may proceed even if e.g. the gaze point is detected to be closer to another object. However, if the gaze point does not meet the correlation requirement with respect to the scene object movement, the visual attention processor 205 may change the visual attention region to correspond to another scene object (typically the closest scene object) or may set the visual attention region to a predetermined region around the current gaze point (or indeed determining that there is no specific visual attention region currently (e.g. corresponding to the user quickly scanning the scene/ viewport).

In some embodiments, the visual attention processor 205 may be arranged to determine a confidence measure for the visual attention region in response to a correlation between movement of the visual attention region and changes in the gaze indication. Specifically, by detecting changes in the gaze point as indicated by the gaze indication and comparing these to the changes in gaze point that would result if the viewer is tracking the motion of the visual attention region (e.g. an object corresponding to the visual attention region), a measure can be determined that is indicative of how probable it is that the viewer indeed has his visual attention focused on this object/ region. If the correlation is high, e.g. changes in the object position as viewed from the view pose is matched by corresponding movements in the gaze point, it is highly likely that the viewer is indeed focusing his attention on the corresponding object and the visual attention region confidence value may be set high. If the correlation is low, the confidence value may be set lower. Indeed, in many embodiments, a correlation measure may be determined and used directly as the confidence measure (or e.g. the confidence measure may be determined as a monotonically increasing function of the correlation measure).

In such embodiments, the image data generator 209 may be arranged to set the quality level, e.g. as represented by the data rate, for the visual attention region based on the determined confidence measure. Specifically, the quality level may be increased for increasing confidence (for example a monotonic function may be used to determine a spatial and/or temporal data rate for the image date of the visual attention region).

This may provide an operation wherein if the apparatus determines that it is highly probable that the viewer is focusing on a specific region/ object, then this is shown at a very high quality with typically most of the view image/ view port being at substantially lower quality. However, if instead it is considered of low probability that the user is currently focusing on the detected region/ object then the quality difference between the region/ object and the rest of the image/ viewport may be reduced substantially. Indeed, if the confidence measure is sufficiently low, the image data generator 209 may set the quality level for the data for the visual attention region and for the rest of the generated data to be substantially the same. This may reduce a perceived quality "flicker" that could arise if the viewer does not limit his focus to the detected visual attention region. Also, if there is a constant data rate limit, it may for example allow the reduced data rate for the visual attention region to be used to increase the data rate for the remainder of the tile/ view port.

In many embodiments, the image data generator 209 may be arranged to switch between two quality levels depending on the confidence measure, such as e.g. between a high quality level associated with visual attention region image data and a low quality level associated with non-visual attention region image data. However, in many embodiments, the image data generator 209 may be arranged to switch between many different quality levels depending on the confidence measure.

In many embodiments, the visual attention processor 205 may be arranged to determine the visual attention region in response to stored user viewing behavior for the scene. The stored user viewing behavior may reflect the frequency/ distribution for previous views of the scene and specifically may reflect the spatial frequency distribution of gaze points for previous views of the scene. The gaze point may e.g. be reflected by one or more parameters such as e.g. a full three-dimensional position, a direction, or e.g. a distance.

In some embodiments, the apparatus may be arranged to monitor and track gaze points of the user in the scene and determine where the user is most frequently looking. As an example, the visual attention processor 205 may track the frequency at which the user is considered to look at specific scene objects, assessed by determining how much of the time the gaze point is sufficiently close to the individual object. Specifically, it may be monitored how often the individual scene objects are selected as the visual attention region. The visual attention processor 205 may in such embodiments, e.g. for each scene object, keep a running total of the number of times that individual scene objects have been selected as a visual attention region.

When determining the visual attention region, the visual attention processor 205 may consider the stored user viewing behavior and may specifically bias the selection/ determination of the visual attention region towards regions/objects that have a higher view frequency. For example, for a given viewer pose and gaze point, the visual attention processor 205 may determine a suitable viewport and may identify some potential candidate scene objects within this viewport. It may then select one of the objects as the visual attention region depending on how close the gaze point is to the individual scene object and on how often the scene objects have previously been selected as visual attention region. The bias towards "popular" scene objects may result in a scene object being selected which is not the closest object to the gaze point but which is a more likely candidate than the closest object.

Different approaches and algorithms may be used to consider the previous user behavior in different embodiments. For example, a cost measure may be determined for each scene object which is dependent on both the distance to the gaze point and a frequency measure indicative of the previous viewing behavior and specifically on how often the scene object has previously been selected as a visual attention region. The visual attention processor 205 may then select the scene object with the lowest cost measure as the visual attention region.

The visual attention processor 205 may accordingly bias the visual attention region towards regions of the scene for which the stored user viewing behavior indicates a higher view frequency relative to regions of the scene for which the stored user viewing behavior indicates a lower view frequency. Such an approach may result in an improved user experience and a selection of the visual attention region which is more likely to correspond to the user's actual visual focus.

The user viewing behavior may reflect viewing behavior during the same VR session and the same user. Thus, the visual attention processor 205 may e.g. store data that indicates e.g. which scene objects are selected as visual attention regions. The subsequent selections of the visual attention region may then take the frequency of the selection of the individual scene objects into account for subsequent selections.

In some embodiments, the viewing behavior may reflect the behavior of previous VR sessions and indeed may reflect the viewing behavior of multiple users. For example, in embodiments where the visual attention processor 205 is implemented in the server 103 of FIG. 1 and thus serves many different users, the selection of individual scene objects (or more generally regions) for all users and all VR sessions may be reflected in the stored viewing behavior data. The selection of the visual attention region may thus further be in response to e.g. previous statistical user behavior when accessing the scene data.

In many embodiments, the visual attention processor 205 may be arranged to further determine a predicted visual attention region. The predicted visual attention region is indicative of an estimated future visual attention of the viewer and thus may specifically not correspond to the current gaze point but instead correspond to an expected future gaze point. The predicted visual attention region may thus be an indication/ estimation of a visual attention region that may be selected in the future.

The visual attention processor 205 may determine the predicted visual attention region in response to relationship data which is indicative of previous viewing behavior relationships between different regions of the scene, and specifically between different scene objects.

The inventors have realized that in many applications, there exists typical or more frequent shifts between different parts of a content and that such user behavior can be recorded and used to provide improved performance.

The visual attention processor 205 may specifically include additional image data for the predicted visual attention region where this image data is at a higher quality level than outside of the predicted visual attention region. In particular, the approaches previously described for providing image data for the current visual attention region may also be applied to provide image data for the predicted visual attention region. Thus, in some embodiments, the image data generator 209 may generate a data stream which includes image data at a given quality for a given tile except for areas corresponding to a current and predicted visual attention region for which the quality level may be substantially higher.

The visual attention processor 205 may determine the predicted visual attention region in response to relationship data indicating a high view(ing) correlation between views of the current visual attention region and the predicted visual attention region.

The relationship data may typically be indicative of previous gaze shifts by viewers accessing the scene and the visual attention processor 205 may determine the predicted visual attention region as a region for which the relationship data indicates a gaze shift frequency of gaze shifts from the visual attention region to the first region that meets a criterion. The criterion may typically require the gaze shift frequency to be above a threshold or e.g. be the highest frequency of a set of gaze shift frequencies from the visual attention region to close scene objects.

As an example, during a number of VR sessions, the visual attention processor 205 may collect data reflecting how the users change their focus. This may for example be done by storing which scene objects are selected as the visual attention region and specifically which selection changes occur. For a given scene object, the visual attention processor 205 may for each other scene object within a given distance record whenever a change in selection occurs from the given scene object to that scene object. When the given scene object is selected as the current visual attention region, the visual attention processor 205 may then proceed to evaluate the stored data to identify a second scene object being the scene object which is most often selected next, i.e. which the visual attention of the user is typically switched.

The visual attention processor 205 may then proceed to transmit data of particularly high quality for both the current visual attention region and for the predicted visual attention region. As a result, view images may be generated for the user which have a particular high quality for the current visual focus of the user as well as for the predicted/ expected next visual focus of the user. If indeed, the user then makes the expected change in visual focus, he will directly and without any lag or delay perceive a high quality of the entire image.

As a specific example, a VR experience in the form of an immersive and embedded viewer experience of a tennis match may be considered where the user is provided with an experience of being a spectator sitting in the stands. In the scenario, the user may change his position or head orientation to e.g. look around, move to a different position etc. In the example, scene objects may correspond to the two players, the umpire, the net, the ball boys or girls, etc.

In such an application, generating viewing behavior data is likely to result in this showing that the scene objects corresponding to the two players are very often selected as visual attention regions, i.e. that the user focus is predominantly with the players. Accordingly, the visual attention processor 205 may be more likely to select one of the player objects as the visual attention region even if the gaze indication indicates that the gaze point is closer to e.g. the net or ball boy.

In addition, the relationship behavior may reflect that the visual attention region is often switched from the first player to the second player and vice versa. Accordingly, when the first player object is selected as the current visual attention region, the visual attention processor 205 may determine the second player object as the predicted visual attention and vice versa. The image data generator 209 may then generate the image data to have a given quality for the tile corresponding to the current view pose but with a substantially higher quality for small areas. Similarly, the image synthesizer 211 may generate the view images to have a given quality except for very small areas around the players (say less than 5° around the first player and the second player) where the quality is substantially higher. A consistently high quality is accordingly perceived by the user when his gaze switches between the different players.

It should also be noted that this approach is consistent with changes in the viewer pose. Specifically, if the viewer pose is changed from one position to another, e.g. corresponding to the user selecting a different position in the stand from which to view the game, the data on selecting visual attention regions is still useful. Specifically, the previous data indicating that the scene objects corresponding to the players are strong candidates for visual attention regions is still relevant, as is the relationship data indicating that the user frequently changes gaze from one player to the other, i.e. between the player scene objects. Of course, the projection of the visual attention regions to the specific view images will change according to the change in viewport.

In some embodiments, the visual attention processor 205 may be arranged to determine a predicted visual attention region in response to movement data of a scene object corresponding to the visual attention region. The predicted visual attention region may for example be determined as a region towards which the scene object is moving, i.e. it may correspond to an estimated or predicted future position of the scene object. The approach may provide improved performance in e.g. cases where the user is tracking a fast moving object which e.g. may be moving so fast that continuously updating the current visual attention region and transmitting corresponding high quality data may introduce a delay or unacceptable lag. For example, if the user is following a ball in a football game, the approach of continuously tracking the corresponding object and transmitting high quality data for a small surrounding area may be suitable when the ball is moving slowly (e.g. passing) but not when the ball is moving fast (e.g. shot or goal kick). In the latter case, the system may predict e.g. that the ball will hit the goal and as a result high quality data for the goal area may be transmitted in advance of the ball reaching the goal.

The previous examples have focused on embodiments in which a given higher image quality is selected for the area corresponding to the visual attention region (or the predicted visual attention region) and with a given lower quality being selected for other areas (e.g. of the viewport). However, in many embodiments a gradual change of the quality may be applied.

For example, a focus point in the view image corresponding to the visual attention region may be identified, and the quality of image areas in the view image may be increased the closer the image area is to the focus point. E.g. the encoding of the view image may be based on macro-blocks as known from many encoding schemes, such as MPEG. The number of bits allocated to each macroblock (and thus the quality of the macro-block) may be determined as a function of the distance between the macro-block and the focus point. The function may be monotonically decreasing with increasing distance thus ensuring that quality increases the closer the macro-block is to the focal point. It will be appreciated that the characteristics of the function can be selected to provide the desired gradual quality distribution. For example, the function can be selected to provide a Gaussian quality/ bit allocation distribution.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. An apparatus for generating an image data stream representing views of a scene, the apparatus comprising:
a receiver (203) for receiving a gaze indication indicative of both a head pose and a relative eye pose for a viewer, the head pose including a head position and the relative eye pose being indicative of an eye pose relative to the head pose;
a determiner (205) for determining a visual attention region in the scene corresponding to the gaze indication;
a generator (209) for generating the image data stream to comprise image data for the scene where the image data is generated to include at least first image data for the visual attention region and second image data for the scene outside the visual attention region; where the generator (209) is arranged to generate the image data to have a higher quality level for the first image data than for the second image data.

2. The apparatus of claim 1 wherein the determiner (205) is arranged to determine the visual attention region to have an extension in at least one direction of no more than 10 degrees for the head pose.

3. The apparatus of any previous claim wherein the visual attention region corresponds to a scene object.

4. The apparatus of claim 3 wherein the determiner (205) is arranged to track movement of the scene object in the scene and the determiner (205) is arranged to determine the visual attention region in response to the tracked movement.

5. The apparatus of any previous claim wherein the determiner (205) is arranged to determine the visual attention region in response to stored user viewing behavior for the scene.

6. The apparatus of claim 5 wherein the determiner (205) is arranged to bias the visual attention region towards regions of the scene for which the stored user viewing behavior indicates a higher view frequency.

7. The apparatus of any previous claim wherein the determiner (205) is arranged to determine a predicted visual attention region in response to relationship data indicative of previous viewing behavior relationships between different regions of the scene; and wherein the generator (209) is arranged to include third image data for the predicted visual attention region in the image data stream; where the generator (209) is arranged to generate the image data to have a higher quality level for the third image data than for the second image data outside the predicted visual attention region.

8. The apparatus of claim 7 wherein the relationship data is indicative of previous gaze shifts by at least one viewer; and the determiner (205) is arranged to determine the predicted visual attention region as a first region of the scene for which the relationship data is indicative of a frequency of gaze shifts from the visual attention region to the first region that exceeds a threshold.

9. The apparatus of any previous claim wherein the determiner (205) is arranged to determine a predicted visual attention region in response to movement data of a scene object corresponding to the visual attention region; and wherein the generator(209) is arranged to include the third image data for the predicted visual attention region; where the generator (209) is arranged to generate the image data to have a higher quality level for the third image data than for the second image data outside the predicted visual attention region.

10. The apparatus of any previous claim wherein the generator (209) is arranged to generate the image data stream as a video data stream comprising images corresponding to viewports for the head pose.

11. The apparatus of any previous claim wherein the determiner (205) is arranged to determine a confidence measure for the visual attention region in response to a correlation between movement of the visual attention region in the scene and changes in the gaze indication; and wherein the generator (209) is arranged to determine the quality for the first image data in response to the confidence measure.

12. The apparatus of any previous claim further comprising a processor arranged to execute an application for the scene where the application is arranged to generate the gaze indication and to render an image corresponding to a viewport for the viewer from the image gaze indication.

13. The apparatus of any previous claim further arranged to receive the gaze indication from a remote client (103) and to transmit the image data stream to the remote client (103).

14. The apparatus of claim 1 wherein the determiner (205) is arranged to determine the visual attention region in response to a gaze distance indication of the gaze indication.

15. A method of generating an image data stream representing views of a scene, the method comprising:
receiving a gaze indication indicative of both a head pose and a relative eye pose for a viewer, the head pose including a head position and the relative eye pose being indicative of an eye pose relative to the head pose;
determining a visual attention region in the scene corresponding to the gaze indication;
generating the image data stream to comprise image data for the scene where the image data is generated to include at least first image data for the visual attention region and second image data for the scene outside the visual attention region; the image data having a higher quality level for the first image data than for the second image data.
